# EUROPEAN PATENT APPLICATION

(11) **EP 4 632 582 A1**
(43) Date of publication of application: **15.10.2025**
(21) Application number: 24887294.7
(22) Date of filing: 25.04.2024
(51) Int. Cl.: G06F 11/22, G06F 9/4401

(54) **MAIN AND BACKUP BIOS AUTOMATIC SWITCHING METHOD AND APPARATUS AND COMPUTER**

(30) Priority: 07.11.2023 CN 202311473038
(71) Applicant: Suzhou Metabrain Intelligent Technology Co., Ltd., Suzhou, Jiangsu 215000 (CN)
(72) Inventor: XU, Shengjun, Suzhou, Jiangsu 215000 (CN); ZHANG, Binghui, Suzhou, Jiangsu 215000 (CN); ZHOU, Chunfen, Suzhou, Jiangsu 215000 (CN)
(74) Representative: Studio Torta S.p.A.
(86) International application number: PCT/CN2024/089829
(87) International publication number: WO 2025/097670

(57) **Abstract**

Embodiments of the present disclosure provide a method and apparatus for automatic switching between primary BIOS and backup BIOS, and a computer. The method comprises: during boot of a computer, a BMC acquiring boot process information for a primary BIOS, the types of the boot process information corresponding to boot phases on a one-to-one basis, and the boot process information changing as the boot phases progress; in a case where the boot process information remains unchanged within preset time periods, the BMC determining that the computer has crashed, the preset time periods corresponding to the boot phases on a one-to-one basis; and the BMC controlling the primary BIOS and the backup BIOS to perform a primary BIOS and backup BIOS switching operation, the primary BIOS and backup BIOS switching operation is configured to switch the primary BIOS to the backup BIOS for booting the computer. The primary BIOS and backup BIOS switching is controlled without manually determining that the computer has crashed, overcoming the problem of poor stability caused by inaccurate or untimely manual determination.

## Description

### Cross-Reference to Related Application

The present disclosure claims priority to Chinese Patent Application No. 202311473038.6, filed to the China National Intellectual Property Administration on November 07, 2023 and entitled "Method and Apparatus for Automatic Switching Between primary BIOS and backup BIOS, and Computer", which is incorporated herein by reference in its entirety.

### Technical Field

Embodiments of the present disclosure relate to the field of computers, and in particular, to a method and apparatus for automatic switching between primary BIOS and backup BIOS, and a computer.

### Background

In current server designs, the secure usage of servers is becoming increasingly crucial. Both a Basic Input/Output System (BIOS) and a Baseboard Management Controller (BMC) have made more requirements for server security of the servers, so as to ensure the usage security of the entire server and protect information of customers from being compromised.

During usage of servers, when BIOS upgrade fails or is damaged by virus attacks, it may cause loss and damage of BIOS parameters of a motherboard, thereby resulting in phenomena such as the server being unable to boot, failing to boot, or operating unstably. While server motherboard design manufacturers may still have room for maneuver in such issues, general customers are unable to resolve these problems, thus giving rise to the design of BIOS security protection.

At the BIOS level, protecting customer usage typically involves protection from the CPU (Central Processing Unit) side and protection from the motherboard side. For the protection from the CPU side, CPU manufacturers may use multiple viruses to attack information bases of the CPU to test insecure areas during CPU usage, thereby fixing various vulnerabilities before the CPU leaves the factory to achieve security protection for the CPU. If the CPU has already been mass-produced and supplied to server integrators, security protection during CPU usage can be achieved by upgrading the BIOS agesa code. For the protection from the motherboard side, it may be divided into pure software methods and software-hardware combined methods to achieve security protection during the usage process of the entire server. For the pure software methods, the BIOS implements a write protection function to block unsecure BIOS information write operations from the OS (operating system) and shell, and can also combine a hardware jumper design to achieve more secure write protection. For the software-hardware combined methods, the commonly used method is a dual BIOS flash design, where two BIOS chips are designed on the motherboard, and when one BIOS is damaged, the other BIOS is automatically enabled randomly, preventing issues such as the computer being unable to boot or functions being unusable.

When designing the dual BIOS flash protection method, the key considerations are how the BIOS determines that the current computer has crashed and how to use the BMC to achieve automatic switching between the primary BIOS and backup BIOS when the computer is crashed.

In related technical solutions, to ensure that the computer can still operate when the current BIOS is damaged or under attack, a manual BIOS switching scheme has been designed. That is, when operation and maintenance personnel find that the current computer has crashed or is unable to operate, they can manually send IPMI (Intelligent Platform Management Interface) commands by means of the BMC to switch the BIOS and reboot, thereby achieving secure boot of the backup BIOS.

However, the original primary BIOS and backup BIOS switching scheme has the following problems:
1). Firstly, this scheme has a very strict attendance and working hours requirements for operation and maintenance personnel. When computers in a customer's computer room are powered on in batches or need to be booted multiple times to verify the stability of the computers, someone must be on guard 24 hours a day. If no one find in time that a computer cannot boot, the computer will remain in a crashed state for a long time, severely affecting the usage efficiency of the customer's computer room.
2). Secondly, for customers, if fixed operation and maintenance personnel are needed to monitor this, a considerable amount of expenditure is required, and it is also a challenge to the technical capabilities of the operation and maintenance personnel because not all operation and maintenance personnel are familiar with the BIOS and the BMC, greatly reducing the flexibility, controllability, and operability of the computer.
3). Finally, whether in the customer's computer room or during computer production on a production line, if a batch of computers have crashed or a batch of computer BIOS are damaged, making them unable to operate normally, then manually conducting switching between the primary BIOS and backup BIOS at this time is unrealistic. Thus, the design of this function becomes a burden instead and cannot serve as a highlight to truly attract customers.

### Summary

Embodiments of the present disclosure provide a method and apparatus for automatic switching between primary BIOS and backup BIOS, and a computer, so as to at least solve the problem of poor stability caused by manually controlling primary BIOS and backup BIOS switching in the related art.

According to some embodiments of the present disclosure, provided is a method for automatic switching between primary BIOS and backup BIOS. The method for automatic switching between the primary BIOS and backup BIOS is applied to a computer which comprises a Baseboard Management Controller (BMC), a primary Basic Input/Output System (BIOS) and a backup BIOS, the backup BIOS being configured to replace the primary BIOS in a case where the primary BIOS fails to boot the computer, and the BMC being configured to control an operation of the primary BIOS and the backup BIOS; and wherein the method for automatic switching between the primary BIOS and backup BIOS comprises: acquiring, by the BMC, boot process information corresponding to the primary BIOS in each boot phase of a plurality of boot phases, the plurality of boot phases comprising a secure boot phase, a loading phase, and a phase of entering an operating system; in a case where the boot process information in any one boot phase of the plurality of boot phases remains unchanged within a corresponding preset time period, determining, by the BMC, that the computer has crashed, wherein the preset time period corresponding to the secure boot phase is a first preset time period, the preset time period corresponding to the loading phase is a second preset time period, and the preset time period corresponding to the phase of entering the operating system is a third preset time period; and controlling, by the BMC, the primary BIOS and the backup BIOS to perform a primary BIOS and backup BIOS switching operation, wherein the primary BIOS and backup BIOS switching operation is configured to switch the primary BIOS to the backup BIOS for booting the computer.

In some exemplary embodiments, the acquiring, by the BMC, boot process information corresponding to the primary BIOS in each boot phase of a plurality of boot phases comprises: in a case where the primary BIOS is in the secure boot phase or the loading phase, determining, by the BMC, first power-on self-test information as the boot process information, wherein the first power-on self-test information is test information output by a central processing unit (CPU) and detected by the BMC during booting the computer by the primary BIOS, and the first power-on self-test information is configured to represent whether the computer has a boot failure.

In some exemplary embodiments, the in a case where the boot process information in any one boot phase of the plurality of boot phases remains unchanged within a corresponding preset time period, determining, by the BMC, that the computer has crashed comprises: in a case where the first power-on self-test information remains unchanged within the first preset time period, determining, by the BMC, that the computer has crashed.

In some exemplary embodiments, before determining, by the BMC, that the computer has crashed, the method further comprises:
in a case where the BMC detects that the CPU is in the same power-on self-test code within two minutes, determining that the first power-on self-test information remains unchanged within the first preset time period.

In some exemplary embodiments, the acquiring, by the BMC, boot process information corresponding to the primary BIOS in each boot phase of a plurality of boot phases further comprises:
in a case where the primary BIOS is in the loading phase and a communication connection is established between the BMC and the primary BIOS, determining, by the BMC, a timestamp when a first instruction is received by the BMC as the boot process information, wherein the first instruction is an instruction sent to the BMC by the primary BIOS at intervals of the second preset time period, and the timestamp is the time when the BMC receives the first instruction.

In some exemplary embodiments, the in a case where the boot process information in any one boot phase of the plurality of boot phases remains unchanged within a corresponding preset time period, determining, by the BMC, that the computer has crashed further comprises:
in a case where the timestamp is not updated within the second preset time period, determining, by the BMC, that the computer has crashed.

In some exemplary embodiments, the acquiring, by the BMC, boot process information corresponding to the primary BIOS in each boot phase of a plurality of boot phases further comprises:
in a case where the primary BIOS is in the phase of entering an operating system, determining, by the BMC, a boot success identifier of the operating system as the boot process information, wherein the boot success identifier is an identifier for recording a boot success of the operating system.

In some exemplary embodiments, the in a case where the boot process information in any one boot phase of the plurality of boot phases remains unchanged within a corresponding preset time period, determining, by the BMC, that the computer has crashed further comprises:
in a case where the boot success identifier remains null during a boot duration of the computer which reaches the third preset time period, determining, by the BMC, that the computer has crashed.

In some exemplary embodiments, before the acquiring, by the BMC, boot process information corresponding to the primary BIOS in each boot phase of a plurality of boot phases, the method further comprises:
in a case where a function file of the primary BIOS has been refreshed to obtain a refreshed function file, synchronizing, by the primary BIOS, the refreshed function file to the backup BIOS, wherein the function file is configured to generate an instruction for executing a function of the primary BIOS.

In some exemplary embodiments, the controlling, by the BMC, the primary BIOS and the backup BIOS to perform a primary BIOS and backup BIOS switching operation comprises:
in a case where the BMC determines that the computer has crashed, triggering, by the BMC, a switching command to control the primary BIOS and the backup BIOS to perform the primary BIOS and backup BIOS switching operation, wherein the switching command is configured to control the primary BIOS to stop performing a task for booting the computer and control the backup BIOS to start performing the task for booting the computer.

In some exemplary embodiments, after the controlling, by the BMC, the primary BIOS and the backup BIOS to perform a primary BIOS and backup BIOS switching operation, the method further comprises:
recording power-on self-test information when the switching command is triggered, wherein the power-on self-test information is test information output by a CPU and detected by the BMC , and the power-on self-test information is configured to represent whether the computer has a boot failure.

In some exemplary embodiments, after the controlling, by the BMC, the primary BIOS and the backup BIOS to perform a primary BIOS and backup BIOS switching operation, the method further comprises:
acquiring, by the BMC, a primary BIOS and backup BIOS switching log, wherein the primary BIOS and backup BIOS switching log is configured to record whether the primary BIOS and backup BIOS switching operation is performed successfully;
in a case where the primary BIOS and backup BIOS switching log records that the primary BIOS and backup BIOS switching operation is performed successfully, controlling, by the BMC, the backup BIOS to perform the task for booting the computer; and
in a case where the primary BIOS and backup BIOS switching log records that the primary BIOS and backup BIOS switching operation is not performed successfully, sending, by the BMC, alarm information indicating that the computer is in a crashed state.

In some exemplary embodiments, in a case where the primary BIOS and backup BIOS switching log records that the primary BIOS and backup BIOS switching operation is performed successfully, controlling, by the BMC, the backup BIOS to perform the task for booting the computer comprises:
in a case where the primary BIOS and backup BIOS switching log records that the primary BIOS and backup BIOS switching operation is performed successfully and the backup BIOS is in the secure boot phase or the loading phase, acquiring, by the BMC, second power-on self-test information, wherein the second power-on self-test information is test information output by a CPU and detected by the BMC during booting the computer by the backup BIOS, and the second power-on self-test information is configured to represent whether the computer has a boot failure; and
in a case where the second power-on self-test information remains unchanged within the first preset time period, sending, by the BMC, the alarm information indicating that the computer is in a crashed state.

In some exemplary embodiments, the acquiring, by the BMC, second power-on self-test information comprises:
detecting, by the BMC, a power-on self-test code in which the CPU currently is, wherein in a case where the BMC detects that the CPU is in a same power-on self-test code within two minutes, the BMC determines that the second power-on self-test information remains unchanged within the first preset time period.

In some exemplary embodiments, in a case where the primary BIOS and backup BIOS switching log records that the primary BIOS and backup BIOS switching operation is performed successfully, controlling, by the BMC, the backup BIOS to perform the task for booting the computer further comprises:
in a case where the primary BIOS and backup BIOS switching log records that the primary BIOS and backup BIOS switching operation is performed successfully and the backup BIOS is in the loading phase and a communication connection is established between the BMC and the backup BIOS, receiving, by the BMC, a second instruction, wherein the second instruction is an instruction sent to the BMC by the backup BIOS at intervals of the second preset time period; and
in a case where the second instruction is not received within the second preset time period, sending, by the BMC, the alarm information indicating that the computer is in a crashed state.

In some exemplary embodiments, in a case where the primary BIOS and backup BIOS switching log records that the primary BIOS and backup BIOS switching operation is performed successfully, controlling, by the BMC, the backup BIOS to perform the task for booting the computer further comprises:
in a case where the primary BIOS and backup BIOS switching log records that the primary BIOS and backup BIOS switching operation is performed successfully and the primary BIOS is in the phase of entering the operating system, querying, by the BMC, a boot success identifier of the operating system; and
in a case where the boot success identifier does not exist within a boot duration of the computer which reaches the third preset time period, sending, by the BMC, the alarm information indicating that the computer is in a crashed state.

In some exemplary embodiments, in a case where the primary BIOS and backup BIOS switching log records that the primary BIOS and backup BIOS switching operation is performed successfully and the primary BIOS is in the phase of entering the operating system, querying, by the BMC, the boot success identifier of the operating system comprises:
querying, by the BMC, from a diagnostics log, whether the boot success identifier exists, wherein the BMC is configured to poll whether there is a change in a state of a general-purpose input/output (GPIO), and write the boot success identifier to the diagnostics log in a case where it is polled that there is a change in the state of the GPIO, and the state of the GPIO is configured to be changed after successfully booting the operating system;
in a case where the BMC queries that the boot success identifier exists in the diagnostics log, determining that the BMC queries the boot success identifier of the operating system; and
in a case where the BMC queries that the boot success identifier does not exist in the diagnostics log, determining that the BMC fails to query the boot success identifier of the operating system.

According to some other embodiments of the present disclosure, provided is an apparatus for automatic switching between primary BIOS and backup BIOS. A computer comprises a Baseboard Management Controller (BMC), a primary Basic Input/Output System (BIOS) and a backup BIOS, the backup BIOS being configured to replace the primary BIOS in the event of boot failure of the primary BIOS, and the BMC being configured to control the operation of the primary BIOS and the backup BIOS; and the apparatus for automatic switching between the primary BIOS and backup BIOS is applied to the BMC, and comprises: a first acquisition module, configured to acquire boot process information corresponding to the primary BIOS in each boot phase of a plurality of boot phases, the plurality of boot phases comprising a secure boot phase, a loading phase, and a phase of entering an operating system; a determination module, configured to determine, in a case where the boot process information for any one of the boot phases remains unchanged within a corresponding preset time period, that the computer has crashed, wherein the preset time period corresponding to the secure boot phase is a first preset time period, the preset time period corresponding to the loading phase is a second preset time period, and the preset time period corresponding to the phase of entering the operating system is a third preset time period; and a first control module, configured to control the primary BIOS and the backup BIOS to perform a primary BIOS and backup BIOS switching operation, wherein the primary BIOS and backup BIOS switching operation is configured to switch the primary BIOS to the backup BIOS for booting the computer.

According to still some other embodiments of the present disclosure, further provided is a non-transitory readable storage medium, the non-transitory readable storage medium storing a computer program, wherein the computer program is configured to execute, when running, the steps in any one of the method embodiments above.

According to still yet some other embodiments of the present disclosure, further provided is a computer, comprising a primary BIOS, a backup BIOS, a memory, a BMC, and a computer program stored on the memory and capable of running on the BMC, wherein the BMC executes the computer program to execute the steps in any one of the method embodiments above.

By means of the present disclosure, according to the method for automatic switching between the primary BIOS and backup BIOS, boot process information for boot phases of the primary BIOS is acquired, that is, information changing with the progression of the boot process is acquired, and if the boot process information remains unchanged within a preset time period, it can be determined that the boot process of the primary BIOS has stalled and the computer has crashed, thereby automatically controlling the primary BIOS and the backup BIOS to perform primary BIOS and backup BIOS switching. The primary BIOS and backup BIOS switching is controlled without manually determining that the computer has crashed, thereby overcoming the problem of poor stability caused by inaccurate or untimely manual determination, i.e. solving the problem of poor stability caused by manually controlling the primary BIOS and backup BIOS switching in the related art.

### Brief Description of the Drawings

Fig. 1 shows a structural block diagram of hardware of a mobile terminal for executing a method for automatic switching between primary BIOS and backup BIOS provided according to embodiments of the present disclosure;
Fig. 2 shows an architecture diagram of a computer provided according to embodiments of the present disclosure;
Fig. 3 shows a schematic flowchart of a method for automatic switching between primary BIOS and backup BIOS provided according to embodiments of the present disclosure;
Fig. 4 shows a schematic flowchart of another method for automatic switching between primary BIOS and backup BIOS provided according to embodiments of the present disclosure; and
Fig. 5 shows a structural block diagram of an apparatus for automatic switching between primary BIOS and backup BIOS provided according to embodiments of the present disclosure.

### Detailed Description of the Embodiments

Hereinafter, embodiments of the present disclosure are described in detail with reference to the accompanying drawings and in conjunction with the embodiments.

It should be noted that the terms "first", "second", etc. in the description, claims, and accompanying drawings of the present disclosure are used to distinguish similar objects, and are not necessarily used to describe a specific sequence or order.

In order to facilitate description, some nouns or terms involved in embodiments of the present disclosure are described below:
BMC: Baseboard Management Controller, which refers to a baseboard management controller of a server.
BIOS: Basic Output and Input, a basic input/output system, which refers to a set of programs embedded in an ROM chip on a motherboard of a computer, stores the most important basic input/output program of the computer, a power-on self-detect program, and a system self-boot program, and has information for reading and writing system settings.
IPMI: Intelligent Platform Management Interface. The IPMI can span different operating systems, firmware and hardware platforms, and can intelligently monitor, control and automatically report the operation status of a large number of servers, so as to reduce the cost of a server system.
IO: I/O (Input/Output), which is divided into two parts: an IO device and an IO interface.
SEC: Security Phase, which refers to a security verification phase in a BIOS boot procedure.
PEI: Pre-EFI Initialization, which refers to an early initialization phase of an EFI in the BIOS boot procedure.
DXE: Driver Execution Environment, which refers to a driver execution environment in the BIOS boot procedure.
BDS: Boot Device Selection, which refers to boot device selection in the BIOS boot procedure.
TSL: Transient System Load, which refers to a first phase executed by an operating system loader (OS Loader) in the BIOS boot procedure.
PSP: Platform Security Processor, which refers to a platform secure boot core.

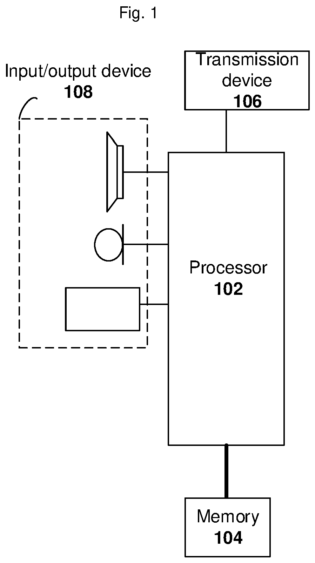

The method embodiments provided in embodiments of the present disclosure may be executed in a server device or a similar computing apparatus. Taking an example of running on the server device, Fig. 1 shows a structural block diagram of hardware of a mobile terminal for executing a method for automatic switching between primary BIOS and backup BIOS provided according to embodiments of the present disclosure. As shown in Fig. 1, the server device may comprise one or more (Fig. 1 shows only one) processors 102 (the processors 102 may include, but are not limited to processing apparatuses such as a microprocessor MCU or a programmable logic device FPGA) and a memory 104 configured to store data. The server device may further comprise a transmission device 106 and an input/output device 108 configured for communication functions. A person of ordinary skill in the art would understand that the structure shown in Fig. 1 is merely exemplary, and does not limit the structure of the server device. For example, the server device may further comprise more or fewer assemblies than those shown in Fig. 1, or have different configurations from that shown in Fig. 1.

The memory 104 may be configured to store a computer program, for example, a software program and module of application software, such as a computer program corresponding to the method for automatic switching between primary BIOS and backup BIOS in embodiments of the present disclosure. The processor 102 executes various functional applications and data processing by running the computer program stored in the memory 104, i.e. implementing the described method. The memory 104 may include a high-speed random access memory, and may further include a non-transitory memory, such as one or more magnetic storage apparatuses, flash memories or other non-transitory solid-state memories. In some examples, the memory 104 may further include memories remotely arranged with respect to the processors 102, and these remote memories may be connected to the server device via a network. Examples of the network include, but are not limited to the Internet, an intranet, a local area network, a mobile communication network and combinations thereof.

The transmission device 106 is configured to receive or send data via a network. Optional examples of the network may include a wireless network provided by a communication provider of the server device. In one example, the transmission device 106 comprises a network interface controller (NIC for short) which may be connected to other network devices by means of a base station, thereby being able to communicate with the Internet. In one example, the transmission device 106 may be a radio frequency (RF for short) module which is configured to communicate with the Internet in a wireless manner.

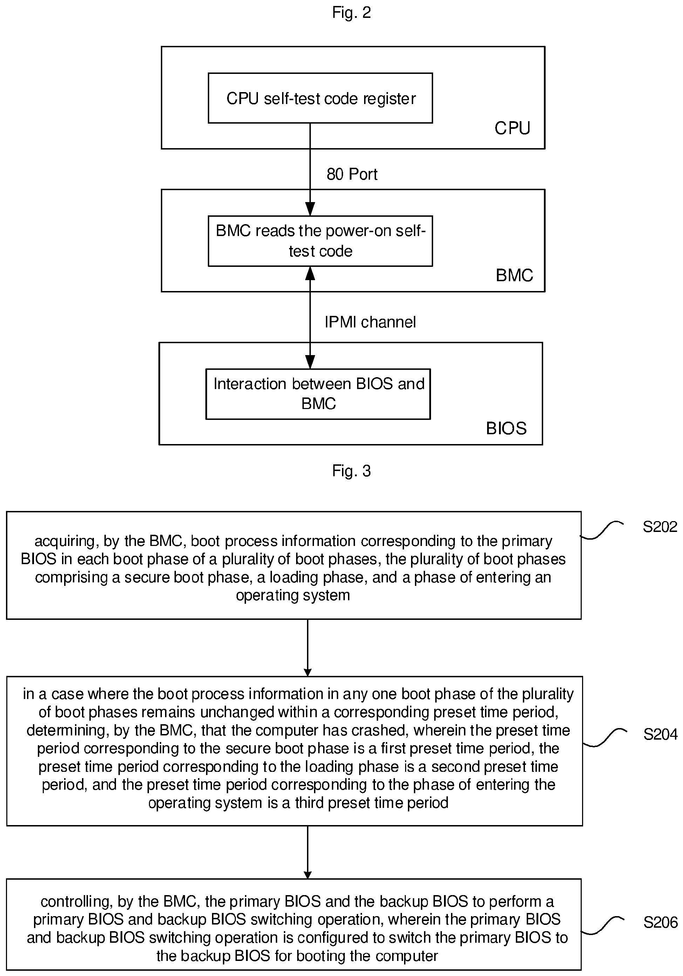

Fig. 2 shows an architecture diagram of a computer provided according to embodiments of the present disclosure. As shown in Fig. 2, the computer comprises a BMC, a primary BIOS and a backup BIOS, the backup BIOS being configured to replace the primary BIOS in the event of boot failure of the primary BIOS, and the BMC being configured to control the operation of the primary BIOS and the backup BIOS. Fig. 3 shows a schematic flowchart of a method for automatic switching between primary BIOS and backup BIOS provided according to embodiments of the present disclosure. As shown in Fig. 3, the flow comprises the following steps:
step S202: acquiring, by the BMC, boot process information corresponding to the primary BIOS in each boot phase of a plurality of boot phases, the plurality of boot phases comprising a secure boot phase, a loading phase, and a phase of entering an operating system.

In an optional application, when the computer is booted up, the primary BIOS starts performing a boot task, sequentially going through a plurality of boot phases. The BMC acquires boot process information corresponding to the primary BIOS during a plurality of boot phases, the types of the boot process information corresponding to the boot phases on a one-to-one basis, and the boot process information changing as the boot phases progress. If the boot process of the primary BIOS is not stalled, i.e. the computer not being crashed, some information of the boot process will change. Corresponding boot process information is acquired at different boot phases, so that the boot process information changes as the boot phases progress. In this way, whether the computer has crashed or not can be determined by means of the boot process information. The secure boot phase is used for verifying and ensuring secure boot, the loading phase is used for loading a configuration for boot, and the operating system entry phase is used for booting the operating system.

Step S204: in a case where the boot process information in any one boot phase of the plurality of boot phases remains unchanged within a corresponding preset time period, determining, by the BMC, that the computer has crashed, wherein the preset time period corresponding to the secure boot phase is a first preset time period, the preset time period corresponding to the loading phase is a second preset time period, and the preset time period corresponding to the phase of entering the operating system is a third preset time period.

In an optional application, periods for updating different boot process information are different, and if the boot process information remains unchanged in a corresponding preset time (update period), it indicates that a boot process for the current boot phase has stalled, and it can be determined that the computer has crashed.

Step S206: controlling, by the BMC, the primary BIOS and the backup BIOS to perform a primary BIOS and backup BIOS switching operation, wherein the primary BIOS and backup BIOS switching operation is configured to switch the primary BIOS to the backup BIOS for booting the computer.

In an optional application, if the computer has crashed, it indicates that the primary BIOS cannot be booted currently, then the primary BIOS and the backup BIOS are controlled to perform primary BIOS and backup BIOS switching, so as to switch to the backup BIOS for boot, thereby ensuring normal boot of the computer.

By means of the described steps, according to the method for automatic switching between the primary BIOS and backup BIOS, boot process information for boot phases of the primary BIOS is acquired, that is, information changing with the progression of the boot process is acquired, and if the boot process information remains unchanged within a preset time period, it can be determined that the boot process of the primary BIOS has stalled and the computer has crashed, thereby automatically controlling the primary BIOS and the backup BIOS to perform primary BIOS and backup BIOS switching. The primary BIOS and backup BIOS switching is controlled without manually determining that the computer has crashed, thereby overcoming the problem of poor stability caused by inaccurate or untimely manual determination, i.e. solving the problem of poor stability caused by manually controlling the primary BIOS and backup BIOS switching in the related art.

The execution subject of the described steps may be [a server, a terminal], and the like, but is not limited thereto.

In some exemplary embodiments, step S202 may be implemented by means of the following step: step S2022: in a case where the primary BIOS is in the secure boot phase or the loading phase, determining, by the BMC, first power-on self-test information as the boot process information, wherein the first power-on self-test information is test information output by a central processing unit (CPU) and detected by the BMC during booting the computer by the primary BIOS, and the first power-on self-test information is configured to represent whether the computer has a boot failure.

In the embodiments above, as shown in Fig. 2, during boot of the computer, the CPU outputs power-on self-detect information through an IO port of 80port at any time. Then, the BMC captures the information through the 80port and displays the information on a BMC web. Therefore, when the primary BIOS is in the secure boot phase or the loading phase, the first power-on self-detect information of the two phases may be used as the boot process information to determine whether the computer has crashed. Only when the operating system is successfully booted in the operating system entry phase, can the computer be booted up, and whether the computer has crashed cannot be determined by means of the power-on self-detect information.

In some exemplary embodiments, step S204 may be implemented by means of the following step: step S2042: in a case where the first power-on self-test information remains unchanged within the first preset time period, determining, by the BMC, that the computer has crashed.

In the embodiments above, the first power-on self-detect information remains unchanged within the first preset time period, i.e. when the BMC detects that the CPU is still in the same power-on self-detect code within two minutes, the BMC determines that the CPU is currently in an operation stop state, that is, the BMC automatically determines that the computer has crashed.

In some exemplary embodiments, step S202 may also be implemented by means of the following step: step S2024: in a case where the primary BIOS is in the loading phase and a communication connection is established between the BMC and the primary BIOS, determining, by the BMC, a timestamp when a first instruction is received by the BMC as the boot process information, wherein the first instruction is an instruction sent to the BMC by the primary BIOS at intervals of the second preset time period, and the timestamp is the time when the BMC receives the first instruction.

In the embodiments above, when the computer is in the secure boot phase (PSP phase) during boot, this phase being before the PEI phase of the BIOS, normal communication between the BMC and the primary BIOS cannot be performed yet. In this case, it can only rely on the monitoring of the BMC to determine whether the PSP phase is in a normal state. After completing initialization of the PSP phase, the computer is followed by a loading phase of the BIOS (phases such as SEC, PEI, DXE, and BDS). As shown in Fig. 2, in these loading phases, whether the BIOS is booted normally can be determined by means of interaction between the primary BIOS and the BMC. The primary BIOS sends an IPMI instruction to the BMC every 30 seconds during boot, and after receiving the IPMI instruction, the BMC sends a reply instruction to the primary BIOS, that is, the first instruction has been received. The moment at which each first instruction is received is different, i.e. the timestamp being different, and the recorded timestamp is continuously updated with the update of the first instruction. Therefore, the timestamp of the first instruction can be used as the boot process information in the loading phase.

In some exemplary embodiments, step S204 may also be implemented by means of the following step: step S2044: in a case where the timestamp is not updated within the second preset time period, determining, by the BMC, that the computer has crashed.

In the embodiments above, if the timestamp is not updated within the second preset time period, that is, the BMC does not receive the instruction sent by the primary BIOS within 30 seconds, the BMC considers that the primary BIOS cannot be booted currently, that is, the BMC automatically determines that the computer has crashed.

In some exemplary embodiments, step S202 may also be implemented by means of the following step: step S2026: in a case where the primary BIOS is in the phase of entering an operating system, determining, by the BMC, a boot success identifier of the operating system as the boot process information, wherein the boot success identifier is an identifier for recording a boot success of the operating system.

In the embodiments above, when the boot duration of the computer is verified multiple times, the computer can normally boot and enter the operating system (OS) within 15 minutes under full configuration. After the computer boots and enters the OS, the state of GPIO (General-Purpose Input/Output) used to monitor that post has been completed will change. Upon detecting a change in the state of the GPIO during polling, the BMC records a boot success identifier (sel) of Boot Up (Boot Up refers to a boot procedure of a system. The process of transitioning a system from a shutdown state or reboot state to running the operating system is referred to as boot) in an IDL (Inspur Diagnostics Log). Therefore, in the operating system entry phase, the sel may be used as the boot process information.

In some exemplary embodiments, step S204 may also be implemented by means of the following step: step S2046: in a case where the boot success identifier remains null during a boot duration of the computer which reaches the third preset time period, determining, by the BMC, that the computer has crashed.

In the embodiments above, if the boot success identifier remains absent during the time period when the boot duration of the computer reaches the third preset time period, that is, the BMC finds that there is no sel of Boot Up in the IDL within 15 minutes, the BMC considers that the primary BIOS cannot be booted currently, that is, the BMC automatically determines that the computer has crashed.

In some exemplary embodiments, before step S202, the method further comprises: step S302: in a case where a function file of the primary BIOS has been refreshed to obtain a refreshed function file, synchronizing, by the primary BIOS, the refreshed function file to the backup BIOS, wherein the function file is configured to generate an instruction for executing a function of the primary BIOS.

In the embodiments above, the function file may be a bin file. After flash of the primary BIOS is refreshed, the primary BIOS actively synchronizes the BIOS bin file to the backup BIOS, implementing bin file synchronization between the primary BIOS and the backup BIOS, so as to determine that the backup BIOS can replace the primary BIOS at any time to execute a corresponding boot task.

In some exemplary embodiments, step S206 may be implemented by means of the following step: step S2062: in a case where the BMC determines that the computer has crashed, triggering, by the BMC, a switching command to control the primary BIOS and the backup BIOS to perform the primary BIOS and backup BIOS switching operation, wherein the switching command is configured to control the primary BIOS to stop performing a task for booting the computer and control the backup BIOS to start performing the task for booting the computer.

In the embodiments above, in a case where the BMC determines that the computer has crashed, the BMC triggers the switching command (IPMI command) to control the primary BIOS and the backup BIOS to perform primary BIOS and backup BIOS switching, such that the backup BIOS replaces the primary BIOS to start performing the task for booting the computer, thereby avoiding impact on user experience due to long-time crash.

In some exemplary embodiments, after step S206, the method further comprises: step S402: recording power-on self-test information when the switching command is triggered, wherein the power-on self-test information is test information output by a CPU and detected by the BMC , and the power-on self-test information is configured to represent whether the computer has a boot failure.

In the embodiments above, the power-up self-detect information is recorded when the switching command (IPMI command) is triggered, that is, the power-on self-detect information during primary BIOS and backup BIOS switching is recorded for research and development analysis. For example, during research and development, at which phase of the PSP the CPU has an error may be determined by means of the power-on self-detect fault information provided by the computer.

In some exemplary embodiments, after step S206, the method further comprises: step S502: acquiring, by the BMC, a primary BIOS and backup BIOS switching log, wherein the primary BIOS and backup BIOS switching log is configured to record whether the primary BIOS and backup BIOS switching operation is performed successfully; step S504: in a case where the primary BIOS and backup BIOS switching log records that the primary BIOS and backup BIOS switching operation is performed successfully, controlling, by the BMC, the backup BIOS to perform the task for booting the computer; and step S506: in a case where the primary BIOS and backup BIOS switching log records that the primary BIOS and backup BIOS switching operation is not performed successfully, sending, by the BMC, alarm information indicating that the computer is in a crashed state.

In the embodiments above, a primary BIOS and backup BIOS switching log indicating whether the switching is successful is generated during primary BIOS and backup BIOS switching; if the switching is successful, the backup BIOS is controlled to replace the primary BIOS to perform the task for booting the computer; and if the switching fails, alarm information indicating that the computer is in a crashed state is issued, so as to remind operation and maintenance personnel of timely maintenance.

In some exemplary embodiments, step S504 may be implemented by means of the following steps: step S5041: in a case where the primary BIOS and backup BIOS switching log records that the primary BIOS and backup BIOS switching operation is performed successfully and the backup BIOS is in the secure boot phase or the loading phase, acquiring, by the BMC, second power-on self-test information, wherein the second power-on self-test information is test information output by a CPU and detected by the BMC during booting the computer by the backup BIOS, and the second power-on self-test information is configured to represent whether the computer has a boot failure; and step S5042: in a case where the second power-on self-test information remains unchanged within the first preset time period, sending, by the BMC, the alarm information indicating that the computer is in a crashed state.

In the embodiments above, when the primary BIOS and backup BIOS switching is successful and the backup BIOS is in the secure boot phase or the loading phase, whether the computer has crashed or not can also be determined by means of the second power-on self-detect information of the current phase. When the BMC detects that the CPU is still in the same power-on self-detect code within two minutes, the BMC determines that the CPU is currently in an operation stop state, that is, the BMC automatically determines that the computer has crashed. If there is no second backup BIOS to switch to, the alarm information indicating that the computer is in a crashed state is issued.

In some exemplary embodiments, step S504 may also be implemented by means of the following steps: step S5043: in a case where the primary BIOS and backup BIOS switching log records that the primary BIOS and backup BIOS switching operation is performed successfully and the backup BIOS is in the loading phase and a communication connection is established between the BMC and the backup BIOS, receiving, by the BMC, a second instruction, wherein the second instruction is an instruction sent to the BMC by the backup BIOS at intervals of the second preset time period; and step S5044: in a case where the second instruction is not received within the second preset time period, sending, by the BMC, the alarm information indicating that the computer is in a crashed state.

In the embodiments above, when the primary BIOS and backup BIOS switching is successful and the backup BIOS is in the loading phase, whether the BIOS is booted normally can also be determined by means of interaction between the primary BIOS and the BMC. The backup BIOS sends an IPMI instruction to the BMC every 30 seconds during boot, and after receiving the IPMI instruction, the BMC sends a reply instruction to the backup BIOS. If the BMC does not receive the instruction sent by the primary BIOS within 30 seconds, the BMC considers that the primary BIOS cannot be booted currently, that is, the BMC automatically determines that the computer has crashed. If there is no second backup BIOS to switch to, the alarm information indicating that the computer is in a crashed state is issued.

In some exemplary embodiments, step S504 may also be implemented by means of the following steps: step S5045: in a case where the primary BIOS and backup BIOS switching log records that the primary BIOS and backup BIOS switching operation is performed successfully and the primary BIOS is in the phase of entering the operating system, querying, by the BMC, a boot success identifier of the operating system; and step S5046: in a case where the boot success identifier does not exist within a boot duration of the computer which reaches the third preset time period, sending, by the BMC, the alarm information indicating that the computer is in a crashed state.

In the embodiments above, when the primary BIOS and backup BIOS switching is successful and the backup BIOS is in operating system entry phase, similarly, if the BMC finds that there is no sel of Boot Up in the IDL within 15 minutes, the BMC considers that the primary BIOS cannot be booted currently, that is, the BMC automatically determines that the computer has crashed. If there is no second backup BIOS to switch to, the alarm information indicating that the computer is in a crashed state is issued.

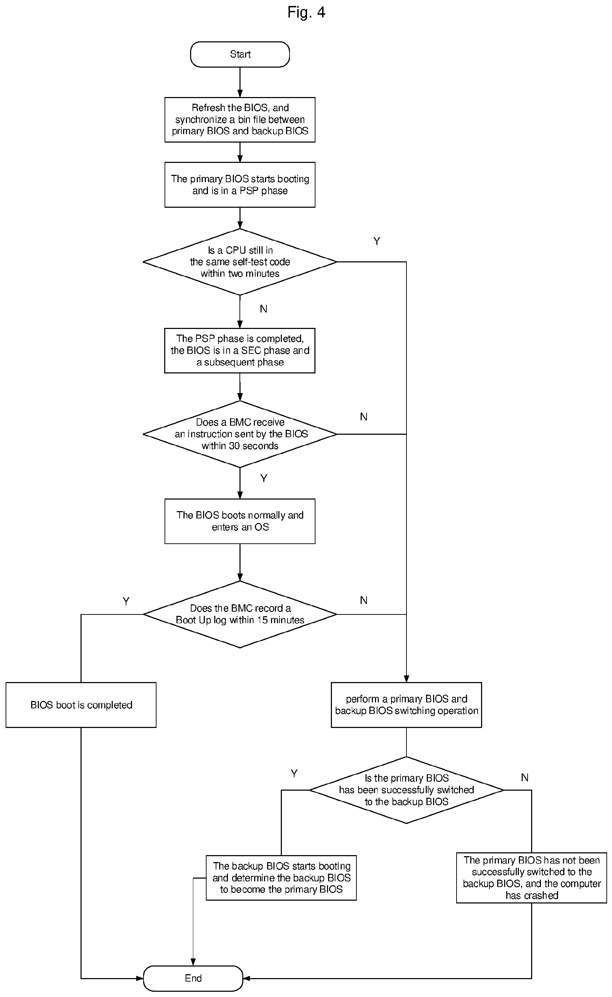

The present embodiment relates to a machine stability testing method. The computer is an AMD platform machine. Fig. 4 shows a schematic flowchart of another method for automatic switching between primary BIOS and backup BIOS provided according to embodiments of the present disclosure. As shown in Fig. 4, the method comprises the following steps:
step S1: after flash of a primary BIOS is refreshed, the primary BIOS actively synchronizes a BIOS bin file to a backup BIOS, implementing bin file synchronization between the primary BIOS and the backup BIOS.
Step S2: when the machine is in the PSP phase during boot, this phase being before the PEI phase of the BIOS, normal communication between the BMC and the primary BIOS cannot be performed yet. In this case, it can only rely on the monitoring of the BMC to determine whether the PSP phase is in a normal state. During boot of the machine, a CPU outputs power-on self-detect information through an IO port of 80port at any time. Then, the BMC captures the information through the 80port and displays the information on a BMC web. When the BMC detects that the CPU is still in the same power-on self-detect code within two minutes, the BMC determines that the CPU is currently in an operation stop state, automatically triggers an IPMI command in an out-of-band manner to perform primary BIOS and backup BIOS switching, and records the power-on self-detect information during primary BIOS and backup BIOS switching for research and development analysis. During research and development, at which phase of the PSP the CPU has an error may be determined by means of power-on self-detect fault information provided by the AMD.
Step S3: After completing initialization of the PSP phase, the machine is followed by loading phases, such as SEC, PEI, DXE and BDS, of the BIOS. In this phase, whether the BIOS is booted normally can be determined by means of interaction between the BIOS and the BMC. The BIOS sends an IPMI instruction to the BMC every 30 seconds during boot, and after receiving the IPMI instruction, the BMC sends a reply instruction to the BIOS. If the BMC does not receive the instruction sent by the BIOS within 30 seconds, the BMC considers that the BIOS cannot be booted currently, triggers the IPMI command to perform primary BIOS and backup BIOS switching, and records the power-on self-detect information during primary BIOS and backup BIOS switching for research and development analysis.
Step S4: when the boot duration of the machine is verified multiple times, the machine can normally boot and enter the OS within 15 minutes under full configuration. After the computer boots and enters the OS, the state of GPIO used to monitor that post has been completed will change. Upon detecting a change in the state of the GPIO during polling, the BMC records an sel of Boot Up in an IDL. If the BMC finds that there is no sel of Boot Up in the IDL within 15 minutes, similarly, the BMC considers that the BIOS cannot be booted currently, triggers the IPMI command to perform primary BIOS and backup BIOS switching, and records the power-on self-detect information during primary BIOS and backup BIOS switching for research and development analysis.

From the description of the embodiments above, a person skilled in the art would have been able to clearly understand that the methods in the embodiments above may be implemented by using software and necessary general hardware platforms, and of course may also be implemented using hardware, but in many cases, the former is a better embodiment. On the basis of such understanding, the portion of the technical solution of the present disclosure that contributes in essence or to the related art may be embodied in the form of a software product stored in a non-transitory readable storage medium (such as an ROM/RAM, a magnetic disk and an optical disc); and the storage medium comprises several instructions to cause a terminal device (which may be a mobile phone, a computer, a server or a network device, etc.) to perform the method according to the embodiments of the present disclosure.

The present embodiment further provides an apparatus for automatic switching between primary BIOS and backup BIOS. As shown in Fig. 2, the computer comprises a BMC, a primary BIOS and a backup BIOS, the backup BIOS being configured to replace the primary BIOS in the event of boot failure of the primary BIOS, and the BMC being configured to control the operation of the primary BIOS and the backup BIOS. The apparatus for automatic switching between the primary BIOS and backup BIOS is applied to the BMC, and the apparatus is configured to implement the embodiments and preferred embodiments above, and what has been described will not be repeated again. As used below, the term "module" may implement a combination of software and/or hardware of preset functions. Although the apparatus described in the following embodiments is preferably implemented in software, implementation in hardware or a combination of software and hardware is also possible and could have been conceived.

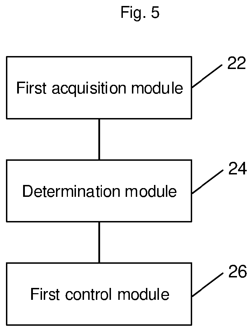

Fig. 5 shows a structural block diagram of an apparatus for automatic switching between primary BIOS and backup BIOS provided according to embodiments of the present disclosure. As shown in Fig. 5, the apparatus for automatic switching between the primary BIOS and backup BIOS comprises:
a first acquisition module 22, configured to acquire boot process information corresponding to the primary BIOS in each boot phase of a plurality of boot phases, the plurality of boot phases comprising a secure boot phase, a loading phase, and a phase of entering an operating system.

In an optional application, when the computer is booted up, the primary BIOS starts performing a boot task, sequentially going through a plurality of boot phases. The BMC acquires boot process information corresponding to the primary BIOS during a plurality of boot phases, the types of the boot process information corresponding to the boot phases on a one-to-one basis, and the boot process information changing as the boot phases progress. If the boot process of the primary BIOS is not stalled, i.e. the computer not being crashed, some information of the boot process will change. Corresponding boot process information is acquired at different boot phases, so that the boot process information changes as the boot phases progress. In this way, whether the computer has crashed or not can be determined by means of the boot process information. The secure boot phase is used for verifying and ensuring secure boot, the loading phase is used for loading a configuration for boot, and the operating system entry phase is used for booting the operating system.

A determination module 24, configured to determine, in a case where the boot process information for any one of the boot phases remains unchanged within a corresponding preset time period, that the computer has crashed, wherein the preset time period corresponding to the secure boot phase is a first preset time period, the preset time period corresponding to the loading phase is a second preset time period, and the preset time period corresponding to the phase of entering the operating system is a third preset time period.

In an optional application, periods for updating different boot process information are different, and if the boot process information remains unchanged in a corresponding preset time (update period), it indicates that a boot process for the current boot phase has stalled, and it can be determined that the computer has crashed.

A first control module 26, configured to control the primary BIOS and the backup BIOS to perform a primary BIOS and backup BIOS switching operation, wherein the primary BIOS and backup BIOS switching operation is configured to switch the primary BIOS to the backup BIOS for booting the computer.

In an optional application, if the computer has crashed, it indicates that the primary BIOS cannot be booted currently, then the primary BIOS and the backup BIOS are controlled to perform primary BIOS and backup BIOS switching, so as to switch to the backup BIOS for boot, thereby ensuring normal boot of the computer.

By means of the modules, according to the apparatus for automatic switching between the primary BIOS and backup BIOS, boot process information for boot phases of the primary BIOS is acquired, that is, information changing with the progression of the boot process is acquired, and if the boot process information remains unchanged within a preset time period, it can be determined that the boot process of the primary BIOS has stalled and the computer has crashed, thereby automatically controlling the primary BIOS and the backup BIOS to perform primary BIOS and backup BIOS switching. The primary BIOS and backup BIOS switching is controlled without manually determining that the computer has crashed, thereby overcoming the problem of poor stability caused by inaccurate or untimely manual determination, i.e. solving the problem of poor stability caused by manually controlling the primary BIOS and backup BIOS switching in the related art.

In some exemplary embodiments, the first acquisition module comprises a first acquisition sub-module which is configured to determine, in a case where the primary BIOS is in the secure boot phase or the loading phase, first power-on self-test information as the boot process information, wherein the first power-on self-test information is test information output by a central processing unit (CPU) and detected by the BMC during booting the computer by the primary BIOS, and the first power-on self-test information is configured to represent whether the computer has a boot failure
in a case where the primary BIOS is in the secure boot phase or the loading phase, determining, by the BMC, first power-on self-test information as the boot process information, wherein the first power-on self-test information is test information output by a central processing unit (CPU) and detected by the BMC during booting the computer by the primary BIOS, and the first power-on self-test information is configured to represent whether the computer has a boot failure.

In the embodiments above, as shown in Fig. 2, during boot of the computer, the CPU outputs power-on self-detect information through an IO port of 80port at any time. Then, the BMC captures the information through the 80port and displays the information on a BMC web. Therefore, when the primary BIOS is in the secure boot phase or the loading phase, the first power-on self-detect information of the two phases may be used as the boot process information to determine whether the computer has crashed. Only when the operating system is successfully booted in the operating system entry phase, can the computer be booted up, and whether the computer has crashed cannot be determined by means of the power-on self-detect information.

In some exemplary embodiments, the determination module comprises a first determination sub-module which is configured to determine, in a case where the first power-on self-test information remains unchanged within the first preset time period, that the computer has crashed.

In the embodiments above, the first power-on self-detect information remains unchanged within the first preset time period, i.e. when the BMC detects that the CPU is still in the same power-on self-detect code within two minutes, the BMC determines that the CPU is currently in an operation stop state, that is, the BMC automatically determines that the computer has crashed.

In some exemplary embodiments, the first acquisition module further comprises a second acquisition sub-module which is configured to determine, in a case where the primary BIOS is in the loading phase and a communication connection is established between the BMC and the primary BIOS, a timestamp when a first instruction is received by the BMC as the boot process information, wherein the first instruction is an instruction sent to the BMC by the primary BIOS at intervals of the second preset time period, and the timestamp is the time when the BMC receives the first instruction.

In the embodiments above, when the computer is in the secure boot phase (PSP phase) during boot, this phase being before the PEI phase of the BIOS, normal communication between the BMC and the primary BIOS cannot be performed yet. In this case, it can only rely on the monitoring of the BMC to determine whether the PSP phase is in a normal state. After completing initialization of the PSP phase, the computer is followed by a loading phase of the BIOS (phases such as SEC, PEI, DXE, and BDS). As shown in Fig. 2, in these loading phases, whether the BIOS is booted normally can be determined by means of interaction between the primary BIOS and the BMC. The primary BIOS sends an IPMI instruction to the BMC every 30 seconds during boot, and after receiving the IPMI instruction, the BMC sends a reply instruction to the primary BIOS, that is, the first instruction has been received. The moment at which each first instruction is received is different, i.e. the timestamp being different, and the recorded timestamp is continuously updated with the update of the first instruction. Therefore, the timestamp of the first instruction can be used as the boot process information in the loading phase.

In some exemplary embodiments, the determination module further comprises a second determination sub-module which is configured to determine, in a case where the timestamp is not updated within the second preset time period, that the computer has crashed.

In the embodiments above, if the timestamp is not updated within the second preset time period, that is, the BMC does not receive the instruction sent by the primary BIOS within 30 seconds, the BMC considers that the primary BIOS cannot be booted currently, that is, the BMC automatically determines that the computer has crashed.

In some exemplary embodiments, the first acquisition module further comprises a third acquisition sub-module which is configured to determine, in a case where the primary BIOS is in the phase of entering an operating system, a boot success identifier of the operating system as the boot process information, wherein the boot success identifier is an identifier for recording a boot success of the operating system.

In the embodiments above, when the boot duration of the computer is verified multiple times, the computer can normally boot and enter the operating system (OS) within 15 minutes under full configuration. After the computer boots and enters the OS, the state of GPIO used to monitor that post has been completed will change. Upon detecting a change in the state of the GPIO during polling, the BMC records a boot success identifier (sel) of Boot Up in an IDL. Therefore, in the operating system entry phase, the sel may be used as the boot process information.

In some exemplary embodiments, the determination module further comprises a third determination sub-module which is configured to determine, in a case where the boot success identifier remains null during a boot duration of the computer which reaches the third preset time period, that the computer has crashed.

In the embodiments above, if the boot success identifier remains absent during the time period when the boot duration of the computer reaches the third preset time period, that is, the BMC finds that there is no sel of Boot Up in the IDL within 15 minutes, the BMC considers that the primary BIOS cannot be booted currently, that is, the BMC automatically determines that the computer has crashed.

In some exemplary embodiments, during boot of a computer, the apparatus further comprises a synchronization module which is configured to synchronize, in a case where a function file of the primary BIOS has been refreshed to obtain a refreshed function file, the refreshed function file to the backup BIOS, wherein the function file is configured to generate an instruction for executing a function of the primary BIOS.

In the embodiments above, the function file may be a bin file. After flash of the primary BIOS is refreshed, the primary BIOS actively synchronizes the BIOS bin file to the backup BIOS, implementing bin file synchronization between the primary BIOS and the backup BIOS, so as to determine that the backup BIOS can replace the primary BIOS at any time to execute a corresponding boot task.

In some exemplary embodiments, the first control module comprises a control sub-module which is configured to trigger, in a case where the BMC determines that the computer has crashed, a switching command to control the primary BIOS and the backup BIOS to perform the primary BIOS and backup BIOS switching operation, wherein the switching command is configured to control the primary BIOS to stop performing a task for booting the computer and control the backup BIOS to start performing the task for booting the computer.

In the embodiments above, in a case where the BMC determines that the computer has crashed, the BMC triggers the switching command (IPMI command) to control the primary BIOS and the backup BIOS to perform primary BIOS and backup BIOS switching, such that the backup BIOS replaces the primary BIOS to start performing the task for booting the computer, thereby avoiding impact on user experience due to long-time crash.

In some exemplary embodiments, the apparatus further comprises a recording module which is configured to recording power-on self-test information when the switching command is triggered, wherein the power-on self-test information is test information output by a CPU and detected by the BMC , and the power-on self-test information is configured to represent whether the computer has a boot failure.

In the embodiments above, the power-up self-detect information is recorded when the switching command (IPMI command) is triggered, that is, the power-on self-detect information during primary BIOS and backup BIOS switching is recorded for research and development analysis. For example, during research and development, at which phase of the PSP the CPU has an error may be determined by means of the power-on self-detect fault information provided by the computer.

In some exemplary embodiments, the apparatus further comprises a second acquisition module, a second control module and an alarm module. The second acquisition module is configured to acquire a primary BIOS and backup BIOS switching log, wherein the primary BIOS and backup BIOS switching log is configured to record whether the primary BIOS and backup BIOS switching operation is performed successfully; the second control module is configured to control, in a case where the primary BIOS and backup BIOS switching log records that the primary BIOS and backup BIOS switching operation is performed successfully, the backup BIOS to perform the task for booting the computer; and the alarm module is configured to send, in a case where the primary BIOS and backup BIOS switching log records that the primary BIOS and backup BIOS switching operation is not performed successfully, alarm information indicating that the computer is in a crashed state.

In the embodiments above, a primary BIOS and backup BIOS switching log indicating whether the switching is successful is generated during primary BIOS and backup BIOS switching; if the switching is successful, the backup BIOS is controlled to replace the primary BIOS to perform the task for booting the computer; and if the switching fails, alarm information indicating that the computer is in a crashed state is issued, so as to remind operation and maintenance personnel of timely maintenance.

In some exemplary embodiments, the second control module comprises a fourth acquisition sub-module and a first alarm sub-module. The fourth acquisition sub-module is configured to acquire, in a case where the primary BIOS and backup BIOS switching log records that the primary BIOS and backup BIOS switching operation is performed successfully and the backup BIOS is in the secure boot phase or the loading phase, second power-on self-test information, wherein the second power-on self-test information is test information output by a CPU and detected by the BMC during booting the computer by the backup BIOS, and the second power-on self-test information is configured to represent whether the computer has a boot failure;
the first alarm sub-module is configured to send, in a case where the second power-on self-test information remains unchanged within the first preset time period, the alarm information indicating that the computer is in a crashed state.

In the embodiments above, when the primary BIOS and backup BIOS switching is successful and the backup BIOS is in the secure boot phase or the loading phase, whether the computer has crashed or not can be determined by means of the second power-on self-detect information of the current phase. When the BMC detects that the CPU is still in the same power-on self-detect code within two minutes, the BMC determines that the CPU is currently in an operation stop state, that is, the BMC automatically determines that the computer has crashed. If there is no second backup BIOS to switch to, the alarm information indicating that the computer is in a crashed state is issued.

In some exemplary embodiments, the second control module comprises a receiving sub-module and a second alarm sub-module. The receiving sub-module is configured to receive, in a case where the primary BIOS and backup BIOS switching log records that the primary BIOS and backup BIOS switching operation is performed successfully and the backup BIOS is in the loading phase and a communication connection is established between the BMC and the backup BIOS, a second instruction, wherein the second instruction is an instruction sent to the BMC by the backup BIOS at intervals of the second preset time period. The second alarm sub-module is configured to send, in a case where the second instruction is not received within the second preset time period, the alarm information indicating that the computer is in a crashed state.

In the embodiments above, when the primary BIOS and backup BIOS switching is successful and the backup BIOS is in the loading phase, whether the BIOS is booted normally can be determined by means of interaction between the primary BIOS and the BMC. The backup BIOS sends an IPMI instruction to the BMC every 30 seconds during boot, and after receiving the IPMI instruction, the BMC sends a reply instruction to the backup BIOS. If the BMC does not receive the instruction sent by the primary BIOS within 30 seconds, the BMC considers that the primary BIOS cannot be booted currently, that is, the BMC automatically determines that the computer has crashed. If there is no second backup BIOS to switch to, the alarm information indicating that the computer is in a crashed state is issued.

In some exemplary embodiments, the second control module comprises a query sub-module and a third alarm sub-module. The query sub-module is configured to query, in a case where the primary BIOS and backup BIOS switching log records that the primary BIOS and backup BIOS switching operation is performed successfully and the primary BIOS is in the phase of entering the operating system, the boot success identifier of the operating system; and the third alarm sub-module is configured to send, in a case where the boot success identifier does not exist within a boot duration of the computer which reaches the third preset time period, the alarm information indicating that the computer is in a crashed state.

In the embodiments above, when the primary BIOS and backup BIOS switching is successful and the backup BIOS is in operating system entry phase, similarly, if the BMC finds that there is no sel of Boot Up in the IDL within 15 minutes, the BMC considers that the primary BIOS cannot be booted currently, that is, the BMC automatically determines that the computer has crashed. If there is no second backup BIOS to switch to, the alarm information indicating that the computer is in a crashed state is issued.

It should be noted that the described modules may be implemented by software or hardware. The latter may be implemented in the following manner, but is not limited thereto: all the described modules are located in the same processor; or all the modules are located in different processors in any arbitrary combination manner.

Embodiments of the present disclosure further provide a non-transitory readable storage medium, the non-transitory readable storage medium storing a computer program, wherein the computer program is configured to execute, when running, the steps in any one of the method embodiments above.

In some exemplary embodiments, the non-transitory readable storage medium may include, but is not limited to: various media that can store a computer program, such as a USB flash drive, a Read-Only Memory (ROM for short), a Random Access Memory (RAM for short), a mobile hard disk, a magnetic disk, or an optical disc.

Embodiments of the present disclosure further provide a computer, comprising a primary BIOS, a backup BIOS, a memory, a BMC, and a computer program stored on the memory and capable of running on the BMC, wherein the BMC executes the computer program to execute the steps in any one of the method embodiments above.

In some exemplary embodiments, the computer may further comprise a transmission device and an input/output device, wherein the transmission device is connected to the processor, and the input/output device is connected to the processor.

For optional examples in the present embodiment, reference can be made to the examples described in the embodiments and exemplary embodiments above, and thus they will not be repeated again in the present embodiment
It is apparent that a person skilled in the art shall understand that various modules or various steps in the embodiments of the present disclosure can be implemented by means of a general computing apparatus, can be integrated on a single computing apparatus, or distributed over a network consisting of a plurality of computing apparatuses, and the various modules or various steps can be implemented by means of program codes executable by a computing apparatus, and thus can be stored in a storage apparatus and executed by a computing apparatus. In addition, in some cases, the shown or described steps may be executed in a sequence different from that shown herein, or the various modules or various steps can be implemented by manufacturing the modules or steps into various integrated circuit modules respectively, or manufacturing multiple modules or steps among the modules or steps into a single integrated circuit module. Thus, the present disclosure is not limited to any specific hardware and software combinations.

The content above merely relates to optional embodiments of the present disclosure and is not intended to limit the embodiments of the present disclosure. For a person skilled in the art, the embodiments of the present disclosure may have various modifications and variations. Any modifications, equivalent replacements, improvements, etc. made within the principle of the embodiments of the present disclosure shall all fall within the scope of protection of the embodiments of the present disclosure.

## Claims

1. A method for automatic switching between primary BIOS and backup BIOS, applied to a computer which comprises a Baseboard Management Controller (BMC), a primary Basic Input/Output System (BIOS) and a backup BIOS, the backup BIOS being configured to replace the primary BIOS in a case where the primary BIOS fails to boot the computer, and the BMC being configured to control an operation of the primary BIOS and the backup BIOS; and
wherein the method for automatic switching between the primary BIOS and backup BIOS comprises:
acquiring, by the BMC, boot process information corresponding to the primary BIOS in each boot phase of a plurality of boot phases, the plurality of boot phases comprising a secure boot phase, a loading phase, and a phase of entering an operating system;
in a case where the boot process information in any one boot phase of the plurality of boot phases remains unchanged within a corresponding preset time period, determining, by the BMC, that the computer has crashed, wherein the preset time period corresponding to the secure boot phase is a first preset time period, the preset time period corresponding to the loading phase is a second preset time period, and the preset time period corresponding to the phase of entering the operating system is a third preset time period; and
controlling, by the BMC, the primary BIOS and the backup BIOS to perform a primary BIOS and backup BIOS switching operation, wherein the primary BIOS and backup BIOS switching operation is configured to switch the primary BIOS to the backup BIOS for booting the computer.

2. The method according to claim 1, wherein the acquiring, by the BMC, boot process information corresponding to the primary BIOS in each boot phase of a plurality of boot phases comprises:
in a case where the primary BIOS is in the secure boot phase or the loading phase, determining, by the BMC, first power-on self-test information as the boot process information, wherein the first power-on self-test information is test information output by a central processing unit (CPU) and detected by the BMC during booting the computer by the primary BIOS, and the first power-on self-test information is configured to represent whether the computer has a boot failure.

3. The method according to claim 2, wherein the in a case where the boot process information in any one boot phase of the plurality of boot phases remains unchanged within a corresponding preset time period, determining, by the BMC, that the computer has crashed comprises:
in a case where the first power-on self-test information remains unchanged within the first preset time period, determining, by the BMC, that the computer has crashed.

4. The method according to claim 3, wherein before determining, by the BMC, that the computer has crashed, the method further comprises:
in a case where the BMC detects that the CPU is in the same power-on self-test code within two minutes, determining that the first power-on self-test information remains unchanged within the first preset time period.

5. The method according to claim 1, wherein the acquiring, by the BMC, boot process information corresponding to the primary BIOS in each boot phase of a plurality of boot phases further comprises:
in a case where the primary BIOS is in the loading phase and a communication connection is established between the BMC and the primary BIOS, determining, by the BMC, a timestamp when a first instruction is received by the BMC as the boot process information, wherein the first instruction is an instruction sent to the BMC by the primary BIOS at intervals of the second preset time period, and the timestamp is the time when the BMC receives the first instruction.

6. The method according to claim 5, wherein the in a case where the boot process information in any one boot phase of the plurality of boot phases remains unchanged within a corresponding preset time period, determining, by the BMC, that the computer has crashed further comprises:
in a case where the timestamp is not updated within the second preset time period, determining, by the BMC, that the computer has crashed.

7. The method according to claim 1, wherein the acquiring, by the BMC, boot process information corresponding to the primary BIOS in each boot phase of a plurality of boot phases further comprises:
in a case where the primary BIOS is in the phase of entering the operating system, determining, by the BMC, a boot success identifier of the operating system as the boot process information, wherein the boot success identifier is an identifier for recording a boot success of the operating system.

8. The method according to claim 7, wherein the in a case where the boot process information in any one boot phase of the plurality of boot phases remains unchanged within a corresponding preset time period, determining, by the BMC, that the computer has crashed further comprises:
in a case where the boot success identifier remains null during a boot duration of the computer which reaches the third preset time period, determining, by the BMC, that the computer has crashed.

9. The method according to claim 1, wherein before the acquiring, by the BMC, boot process information corresponding to the primary BIOS in each boot phase of a plurality of boot phases, the method further comprises:
in a case where a function file of the primary BIOS has been refreshed to obtain a refreshed function file, synchronizing, by the primary BIOS, the refreshed function file to the backup BIOS, wherein the function file is configured to generate an instruction for executing a function of the primary BIOS.

10. The method according to any one of claims 1 to 9, wherein the controlling, by the BMC, the primary BIOS and the backup BIOS to perform a primary BIOS and backup BIOS switching operation comprises:
in a case where the BMC determines that the computer has crashed, triggering, by the BMC, a switching command to control the primary BIOS and the backup BIOS to perform the primary BIOS and backup BIOS switching operation, wherein the switching command is configured to control the primary BIOS to stop performing a task for booting the computer and control the backup BIOS to start performing the task for booting the computer.

11. The method according to claim 10, wherein after the controlling, by the BMC, the primary BIOS and the backup BIOS to perform a primary BIOS and backup BIOS switching operation, the method further comprises:
recording power-on self-test information when the switching command is triggered, wherein the power-on self-test information is test information output by a CPU and detected by the BMC , and the power-on self-test information is configured to represent whether the computer has a boot failure.

12. The method according to claim 10, wherein after the controlling, by the BMC, the primary BIOS and the backup BIOS to perform a primary BIOS and backup BIOS switching operation, the method further comprises:
acquiring, by the BMC, a primary BIOS and backup BIOS switching log, wherein the primary BIOS and backup BIOS switching log is configured to record whether the primary BIOS and backup BIOS switching operation is performed successfully;
in a case where the primary BIOS and backup BIOS switching log records that the primary BIOS and backup BIOS switching operation is performed successfully, controlling, by the BMC, the backup BIOS to perform the task for booting the computer; and
in a case where the primary BIOS and backup BIOS switching log records that the primary BIOS and backup BIOS switching operation is not performed successfully, sending, by the BMC, alarm information indicating that the computer is in a crashed state.

13. The method according to claim 12, wherein in a case where the primary BIOS and backup BIOS switching log records that the primary BIOS and backup BIOS switching operation is performed successfully, controlling, by the BMC, the backup BIOS to perform the task for booting the computer comprises:
in a case where the primary BIOS and backup BIOS switching log records that the primary BIOS and backup BIOS switching operation is performed successfully and the backup BIOS is in the secure boot phase or the loading phase, acquiring, by the BMC, second power-on self-test information, wherein the second power-on self-test information is test information output by a CPU and detected by the BMC during booting the computer by the backup BIOS, and the second power-on self-test information is configured to represent whether the computer has a boot failure; and
in a case where the second power-on self-test information remains unchanged within the first preset time period, sending, by the BMC, the alarm information indicating that the computer is in a crashed state.

14. The method according to claim 13, wherein the acquiring, by the BMC, second power-on self-test information comprises:
detecting, by the BMC, a power-on self-test code in which the CPU currently is, wherein in a case where the BMC detects that the CPU is in a same power-on self-test code within two minutes, the BMC determines that the second power-on self-test information remains unchanged within the first preset time period.

15. The method according to claim 12, wherein in a case where the primary BIOS and backup BIOS switching log records that the primary BIOS and backup BIOS switching operation is performed successfully, controlling, by the BMC, the backup BIOS to perform the task for booting the computer further comprises:
in a case where the primary BIOS and backup BIOS switching log records that the primary BIOS and backup BIOS switching operation is performed successfully and the backup BIOS is in the loading phase and a communication connection is established between the BMC and the backup BIOS, receiving, by the BMC, a second instruction, wherein the second instruction is an instruction sent to the BMC by the backup BIOS at intervals of the second preset time period; and
in a case where the second instruction is not received within the second preset time period, sending, by the BMC, the alarm information indicating that the computer is in a crashed state.

16. The method according to claim 12, wherein in a case where the primary BIOS and backup BIOS switching log records that the primary BIOS and backup BIOS switching operation is performed successfully, controlling, by the BMC, the backup BIOS to perform the task for booting the computer further comprises:
in a case where the primary BIOS and backup BIOS switching log records that the primary BIOS and backup BIOS switching operation is performed successfully and the primary BIOS is in the phase of entering the operating system, querying, by the BMC, a boot success identifier of the operating system; and
in a case where the boot success identifier does not exist within a boot duration of the computer which reaches the third preset time period, sending, by the BMC, the alarm information indicating that the computer is in a crashed state.

17. The method according to claim 16, wherein in a case where the primary BIOS and backup BIOS switching log records that the primary BIOS and backup BIOS switching operation is performed successfully and the primary BIOS is in the phase of entering the operating system, querying, by the BMC, the boot success identifier of the operating system comprises:
querying, by the BMC, from a diagnostics log, whether the boot success identifier exists, wherein the BMC is configured to poll whether there is a change in a state of a general-purpose input/output (GPIO), and write the boot success identifier to the diagnostics log in a case where it is polled that there is a change in the state of the GPIO, and the state of the GPIO is configured to be changed after successfully booting the operating system;
in a case where the BMC queries that the boot success identifier exists in the diagnostics log, determining that the BMC queries the boot success identifier of the operating system; and
in a case where the BMC queries that the boot success identifier does not exist in the diagnostics log, determining that the BMC fails to query the boot success identifier of the operating system.

18. An apparatus for automatic switching between primary BIOS and backup BIOS, wherein a computer comprises a Baseboard Management Controller (BMC), a primary Basic Input/Output System (BIOS) and a backup BIOS, the backup BIOS being configured to replace the primary BIOS in the event of boot failure of the primary BIOS, and the BMC being configured to control the operation of the primary BIOS and the backup BIOS; and the apparatus for automatic switching between the primary BIOS and backup BIOS is applied to the BMC, and
comprises:
a first acquisition module, configured to acquire boot process information corresponding to the primary BIOS in each boot phase of a plurality of boot phases, the plurality of boot phases comprising a secure boot phase, a loading phase, and a phase of entering an operating system;
a determination module, configured to determine, in a case where the boot process information for any one of the boot phases remains unchanged within a corresponding preset time period, that the computer has crashed, wherein the preset time period corresponding to the secure boot phase is a first preset time period, the preset time period corresponding to the loading phase is a second preset time period, and the preset time period corresponding to the phase of entering the operating system is a third preset time period; and
a first control module, configured to control the primary BIOS and the backup BIOS to perform a primary BIOS and backup BIOS switching operation, wherein the primary BIOS and backup BIOS switching operation is configured to switch the primary BIOS to the backup BIOS for booting the computer.

19. A non-transitory readable storage medium, wherein
the non-transitory readable storage medium stores a computer program, wherein when the computer program executed by a processor, the method according to any one of claims 1 to 17 is implemented.

20. Acomputer, comprising a primary Baseboard Management Controller (BIOS), a backup BIOS, a memory, a Baseboard Management Controller (BMC), and a computer program stored on the memory and executable on the BMC, wherein
in a case where the computer program executed by the BMC, the method according to any one of claims 1 to 17 is implemented.
